# FASCICULE DE BREVET EUROPEEN

(11) **EP 0 530 169 B1**
(45) Date de publication et mention de la délivrance du brevet: **25.09.1996**
(21) Numéro de dépôt: 92870130.9
(22) Date de dépôt: 25.08.1992
(51) Int. Cl.: C08J 11/08, C10G 1/10, B03B 5/28

(54) **Procédé de conversion de polymères**
Verfahren zur Umwandlung von Polymeren
Process for the conversion of polymers

(30) Priorité: 27.08.1991 BE 9100793
(43) Date de publication de la demande: 03.03.1993
(73) Titulaire: PETROFINA S.A., B-1040 Bruxelles (BE)
(72) Inventeur: de Broqueville, Axel, B-1950 Kraainem (BE)
(74) Mandataire: Detrait, Jean-Claude

(56) Documents cités:
- EP-A- 0 115 051
- EP-A- 0 276 081
- EP-A- 0 414 439
- DD-A- 207 628
- FR-A- 2 310 160
- US-A- 4 584 421
- CHEMICAL ABSTRACTS, vol. 88, no. 14, 3 Avril 1978, Columbus, Ohio, US; abstract no. 90637g, 'SEPARATION OF WASTE PLASTIC MIXTURES' page 43 & JP-A-52 084 260
- DATABASE WPI Section Ch, Week 7524, Derwent Publications Ltd., London, GB; Class A35, AN 75-40000W & JP-A-49 116 176

## Description

La présente invention se rapporte à la conversion de polymères, particulièrement de déchets de polymères, en produits industriellement utiles. Plus particulièrement, elle se rapporte à la conversion de mélanges de polymères en produits à plus bas poids moléculaire et notamment en hydrocarbures légers qui peuvent être recyclés ou utilisés comme matière première.

Les polymères sont produits en quantités de plus en plus importantes; la plus grande partie est utilisée dans le secteur de l'emballage à usage unique.

Toutefois, leur faible propension à la décomposition naturelle, couplée à la diminution du nombre des terrains de décharge disponibles, incite à rechercher d'autres voies pour traiter les emballages usagés en matériaux polymères.

L'incinération, technique fréquemment utilisée pour le traitement des déchets ménagers, donne de bons résultats avec les polyoléfines, dont la combustion complète et dans les règles de l'art donne de l'eau et du dioxyde de carbone, mais convient moins à d'autres polymères qui s'incinèrent moins bien, tendent à carboniser et à donner des fumées nocives.

Le recyclage des polymères en tant que tels ne s'applique que pour des applications limitées et nécessite, après collecte, un triage préalable selon leur nature.

Il existe donc un besoin pour un procédé de conversion à grande échelle de polymères, particulièrement de déchets de polymères mélangés, en produits à plus bas poids moléculaire et notamment en hydrocarbures plus légers qui puissent être recyclés ou utilisés comme matière première, par exemple pour approvisionner des raffineries de pétrole et des vapocraqueurs pétrochimiques.

Le comportement des polymères à haute température, le cas échéant en présence de catalyseurs ou réactifs appropriés, a été étudié depuis de nombreuses années et est bien connu de l'homme de l'art. Il résulte, selon les cas, en une dépolymérisation (par exemple lors de la pyrolyse du polystyrène ou de la méthanolyse ou l'hydrolyse du polyéthylène téréphtalate) ou en une décomposition (par exemple lors du traitement catalytique du polyéthylène).

Ainsi, le brevet US-A-4151216 décrit le craquage catalytique du polypropylène à 425-475°C sur silice-alumine, donnant un combustible liquide dès 50°C.

Le brevet US-A-4143086 décrit le craquage catalytique en lit fluidisé du polypropylène amorphe en présence d'une charge d'hydrocarbure, donnant un effluent contenant du propylène.

La demande de brevet EP-A-414439 décrit la conversion de polymères à haut poids moléculaire en produits à plus bas poids moléculaire en chauffant le polymère (éventuellement dissous) au contact d'un catalyseur zéolithique acide.

La demande de brevet EP-A-276081 et le brevet US-4584421 décrivent des procédés de décomposition de polyoléfines en deux étapes, consistant en un craquage thermique suivi d'un craquage catalytique du produit de la première réaction.

Toutefois, ces procédés n'envisagent pas le traitement de mélanges de polymères divers et les problèmes qui en découlent.

Il semble dès lors important et nécessaire à notre époque de pouvoir disposer d'un procédé simple, comportant un minimum d'étapes, et qui permette le traitement de mélanges de polymères.

La demande de brevet FR-A-2310160 décrit un procédé de séparation des constituants d'un mélange de matières plastiques en présence d'un agent mouillant, en fonction des densités des constituants. Le procédé se déroule dans l'eau ou dans une solution et l'agent mouillant est choisi parmi les lignosulfonates de sodium, de calcium, l'acide tannique, le québracho et la gélatine.

La demande de brevet EP-A-0115051 décrit un procédé de régénération de résine comprenant les étapes de dissolution de déchet de résine dans un solvant organique pour fournir une solution résineuse, de mélange de la solution résineuse avec un liquide (non miscible avec le solvant et ayant une densité inférieure au solvant et supérieure à la résine) à température normale, ce qui dissout à peine la résine, et ensuite de séparation et de récupération de la résine.

La demande de brevet JP-A-52084260 décrit un procédé de séparation de mélanges de déchet de plastiques. Par exemple, un mélange de déchet plastique en poudre contenant du PVC film, du PVC panneau rigide, du polypropylène, du film polyéthylène, du polystyrène et de la pulpe, a été agité avec un mélange de xylène et d'eau et ensuite filtré. Le filtrat a été chauffé avec du sulfate de sodium et séparé en couches organique et aqueuse.

La demande de brevet JP-A-49116176 décrit un procédé de traitement des déchets plastiques. Ces derniers sont mélangés avec une huile hydrocarbonée à haute température d'ébullition. La partie insoluble est enlevée et les solutions sont décomposées thermiquement en gaz et huile.

La demande de brevet DD-A-207628 décrit un procédé comprenant les étapes successives de traitement d'un mélange de déchets plastiques avec de l'eau, du dichlorométhane froid, du dichlorométhane chaud et du cyclohexane. Ce procédé de dissolution sélective permet de récupérer du polystyrène, des polyoléfines et du PVC purs.

La Demanderesse a maintenant mis au point un procédé intégré de conversion de polymères, particulièrement adapté au traitement des déchets de polymères, en produits industriellement utiles.

Le procédé de conversion de polymères selon l'invention comprend au moins les étapes de :
(1) mise en contact des polymères broyés avec un liquide dissolvant les polymères styréniques mais ni les polyoléfines, ni le polyéthylène téréphtalate (PET), ni le chlorure de polyvinyle (PVC), et capable de séparer par densité les polyoléfines du PET et du PVC;
(2) séparation en
   (a) une fraction comprenant les polymères styréniques dissous,
   (b) les polyoléfines, et
   (c) un mélange consistant essentiellement en PET et PVC;
(3) conversion d'au moins une matière polymère séparée à l'étape précédente en produits à plus bas poids moléculaire.

Le procédé de l'invention est particulièrement adapté au traitement de déchets d'emballage. Ces déchets contiennent essentiellement les polymères suivants :
- polyéthylène (PE) haute et basse densité
- polypropylène (PP)
- polystyrène (PS)
- chlorure de polyvinyle (PVC)
- polyéthylène téréphtalate (PET).

Ces polymères, récupérés sous forme de films, corps creux, raviers, ou mousse, ne sont généralement pas triés selon leur nature. Avant de les traiter, il convient de les broyer en poudre ou en copeaux et, le cas échéant, de les nettoyer et d'enlever les fractions non polymères (papier, métal, ...) bien que ce procédé doive permettre de se passer de nettoyage si la collecte est suffisamment sélective.

En présence de quantités importantes de mousses insolubles dans le liquide utilisé pour séparer les polymères, principalement de mousses à cellules fermées, on peut appliquer un procédé de redensification, comme par exemple celui décrit dans le brevet BE-A-897260.

Selon un mode d'exécution, le mélange de polymères broyés est mis en contact avec un liquide capable de dissoudre dans les conditions opératoires choisies, les polymère styréniques tout en laissant intacts les polyoléfines, le PET et le PVC, ce liquide ayant une densité telle que les polyoléfines seront séparées par densité du PET et du PVC. Les conditions opératoires préférées comprennent une température allant de la température ambiante à la température d'ébullition du liquide, de préférence pas trop éloignée de la température ambiante.

Selon ce mode d'exécution du procédé de l'invention, on utilise comme liquide un solvant ou un mélange de solvants organiques miscibles ayant une densité comprise entre 0,98 et 1,2 , de préférence entre 1,00 et 1,10 et de préférence entre 1,05 et 1,10. Comme exemple, on peut citer un mélange de trichloro-1,1,1 éthane avec du toluène, du xylène ou une huile de cycle légère ou encore le dioxane; on utilise de préférence un mélange équipondéral de trichloro-1,1,1 éthane et de toluène qui dissout complètement les polymères styréniques à température ambiante. Pour réduire la présence de chlore, des solvants de la famille des cétones peuvent être utilisés.

Les débits en polymères broyés et en liquide ainsi que le temps de contact sont ajustés de telle sorte que les polymères styréniques soient pratiquement totalement dissous pour donner une solution aussi concentrée que possible (généralement contenant de 10 à 50% en poids de polymère). Le solvant contenant le polystyrène dissous peut être recyclé jusqu'à obtention de la concentration désirée.

Après mélange et décantation, on récupère
- une partie légère insoluble, consistant essentiellement en polyoléfines, à la surface,
- une partie lourde insoluble, consistant principalement en PET et PVC, au fond, et
- une solution de polymères styréniques.

Selon un troisième mode d'exécution du procédé de l'invention, on utilise un mélange de deux liquides non miscibles, à une température comprise entre 20 et 100°C et de préférence entre 30 et 80°C :
(1) de l'eau
(2) un solvant hydrocarboné.

Le solvant hydrocarboné est choisi de manière à avoir, à la température choisie, une densité inférieure à 0,9 et généralement comprise entre 0,75 et 0,9 et un excellent pouvoir solvant pour le polystyrène tout en ne dissolvant pratiquement pas les autres polymères et en particulier les polyoléfines. Il faut noter que la densité du solvant choisi devra demeurer, à la température d'utilisation, inférieure à 0,9 après dissolution des polymères styréniques. Comme solvants appropriés, on peut citer le gasoil, le naphta, le kérosène, l'huile de cycle (légère ou lourde), les essences lourdes de craquage catalytique et de réformat catalytique, les solvants aromatiques (notamment le toluène, le xylène, l'éthylbenzène) et leurs mélanges. On préfère les solvants contenant une proportion importante d'hydrocarbures aromatiques. Du toluène mélangé (pour abaisser la densité) à des hydrocarbures distillants dans la même zone est récupérable aisément par distillation et peut être préféré malgré la légère solubilité du toluène dans l'eau.

Les polymères broyés sont introduits dans le récipient via un sas rempli d'eau (de préférence à la même température que le mélange des deux liquides) avant d'être mis en contact avec un solvant plus léger que l'eau et non miscible à l'eau. De cette manière, on sépare les polymères en deux fractions sans les dissoudre : la fraction légère comprenant notamment les polyoléfines et les polymère styréniques et la fraction lourde comprenant le PET et le PVC et les polymères lourds. L'ensemble des polymères passe ensuite dans le récipient comprenant le mélange des deux liquides non miscibles, où seule la fraction légère entre par sa densité en contact avec le solvant hydrocarboné qui va dissoudre les polymères styréniques.

Les débits en polymères broyés et en solvant hydrocarboné ainsi que le temps de contact sont ajustés de telle sorte que l'on obtient, à la température choisie, une dissolution quasi-totale des polymères styréniques pour obtenir une solution contenant de 10 à 50% en poids de polymère. Le solvant contenant le polystyrène dissous peut être recyclé jusqu'à l'obtention de la concentration désirée.

La quantité d'eau dans le récipient où a lieu la mise en contact n'est pas critique. On adopte généralement des valeurs égales à celles du solvant hydrocarboné. En cas d'opération continue, le débit doit être juste suffisant pour compenser les pertes et maintenir la surface de séparation à hauteur constante.

Les polymères styréniques ayant une densité d'environ 1,03, il est opportun d'adapter la densité de l'eau de manière à éviter qu'ils ne coulent. A cet effet, on peut déjà utiliser les détergents déjà présents dans les déchets traités et ajuster la densité par un ajout de détergent usuel. On peut également utiliser de l'eau salée à une concentration d'environ 4 à 5 g par litre, mais l'on préfère cependant les détergents vu qu'ils permettent d'éviter le collage du PVC sur les polyoléfines et qu'ils peuvent subir les divers traitements auxquels sont soumises les matières plastiques.

Dans le cadre d'une action continue, il faut éviter que des détergents s'accumulent dans le récipient et ne modifient de manière inadéquate la densité de l'eau. A cet effet, on peut injecter, dans la conduite d'évacuation des polymères lourds, un contre-courant d'eau de manière à controler au mieux la densité du liquide dans le récipient.

La quantité d'agents tensio-actifs présents dans l'eau est adaptée pour favoriser une précipitation rapide de la fraction lourde insoluble dans l'eau et éviter un collage du PVC sur les polyoléfines. On évitera également une accumulation trop importante de détergent en utilisant les solutions préconisées plus avant.

Après les opérations usuelles de mélange, décantation, etc..., la partie légère insoluble dans le solvant (consistant essentiellement en mousses insolubles à cellules fermées) est récupérée à la surface de celui-ci, tandis que la partie lourde insoluble dans le solvant (consistant principalement en PET, PVC et déchets d'étiquettes en papier) est récupérée au fond de l'eau. Par ailleurs, on récupère une fraction comprenant le solvant hydrocarboné (avec les polymères, consistant principalement en polystyrène, qui s'y sont dissous à la température choisie) et les polymères insolubles (consistant essentiellement en polyoléfines) présents à l'interface eau/solvant.

Cette fraction est ensuite soumise à une séparation mécanique (filtration, centrifugation, décantation ou tamisage, selon la taille des particules de polymères insolubles) de la partie insoluble consistant essentiellement en polyoléfines hors de la solution de polymères styréniques. La décantation au travers d'un contre courant de solvant pur est préférée car elle permet de parfaire le nettoyage des polyoléfines qui sont en général les fractions les plus importantes à récupérer.

Quel que soit le mode d'exécution particulier choisi pour les étapes de mise en contact et séparation, on convertit au moins une matière polymère séparée comme décrit ci-avant en produits à plus bas poids moléculaire.

Selon un mode d'exécution, on chauffe la solution de polymères styréniques pour enlever d'éventuelles traces d'eau et l'essentiel du solvant, qui est recycle, avant d'envoyer les polymères (à présent fondus après avoir été dissous dans le solvant) dans un réacteur de craquage thermique, à moins de les transformer en granulés pour recyclage mécanique. Le produit principal de cette réaction est du styrène, dans un mélange composé essentiellement d'hydrocarbures normalement liquides. Le styrène peut être récupéré, purifié et recyclé, tandis que les autres hydrocarbures peuvent être recyclés en raffinerie de pétrole ou dans des vapocraqueurs pétrochimiques.

Selon un autre mode d'exécution, les polymères insolubles récupérés lors de la séparation mécanique, qui consistent essentiellement soit en polyoléfines, soit en polymères styréniques et en polyoléfines, sont chauffés, pour éliminer l'eau et le solvant qui sont recyclés au mélangeur; les polymères sont ensuite fondus, et portés à la température de craquage. Le craquage est réalisé dans un réacteur de craquage catalytique.

Selon un mode d'exécution préféré, après élimination du solvant, on a mélangé le polymère fondu avec une fraction lourde recyclée du réacteur de craquage catalytique, celle-ci ayant de préférence un point d'ébullition supérieur à la température de fusion du polymère, ceci afin de réduire la viscosité du polymère fondu avant de le chauffer à la température de craquage.

Les catalyseurs utilisés, les conditions de réaction et les produits obtenus sont bien connus (par exemple du document EP-A-414439) et ne doivent plus être décrits en détail ici. Ces produits, principalement des hydrocarbures normalement liquides, peuvent être récupérés, purifiés et recyclés en partie comme expliqué ci-dessus pour réduire la viscosité du polymère fondu, ou utilisés comme matière première en raffinerie de pétrole ou dans des vapocraqueurs pétrochimiques.

Le PET, qui est récupéré dans la partie lourde insoluble, peut être soumis à un traitement de décomposition sélective laissant intacts d'autres polymères et notamment le PVC, constituant principal de cette partie. Ce dernier peut être craqué thermiquement en présence d'agents fixant le chlore (CaO, soude caustique, etc...).

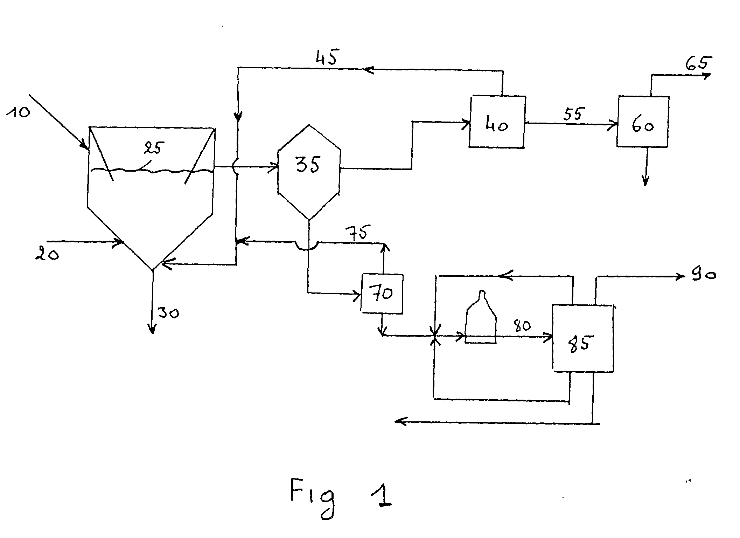

L'invention sera maintenant décrite plus en détail en se référant aux figures 1, 2 et 3 qui représentent schématiquement des modes d'exécution particuliers parmi les nombreux possibles.

Sur la figure 1, le mélange de déchets polymères d'emballage broyés est envoyé par le système d'alimentation 10 dans un mélangeur 15 où il est mis en contact avec un mélange de toluène et de trichloro-1,1,1 éthane introduit par la canalisation 20. Après mélange et décantation, la partie légère insoluble est récupérée à la surface en 25, tandis que la partie lourde insoluble est évacuée par la conduite 30.

La fraction comprenant le mélange solvant et les polymères qui s'y sont dissous est récupérée en 35, chauffée en 40 pour éliminer le mélange solvant (qui est recyclé via la conduite 45) et donner un mélange polymère fondu composé essentiellement de polystyrène qui est envoyé par la conduite 55 dans un réacteur de craquage thermique 60, d'où on récupère en 65 un mélange d'hydrocarbures composé essentiellement de styrène.

La partie légère insoluble (composée essentiellement de polyoléfines) est récupérée en 25, traitée dans un sécheur 70 (d'où le solvant est recyclé via la conduite 75) puis fondue et envoyée par la conduite 80 dans un réacteur de craquage catalytique 85 d'où on récupère un mélange d'hydrocarbures en 90.

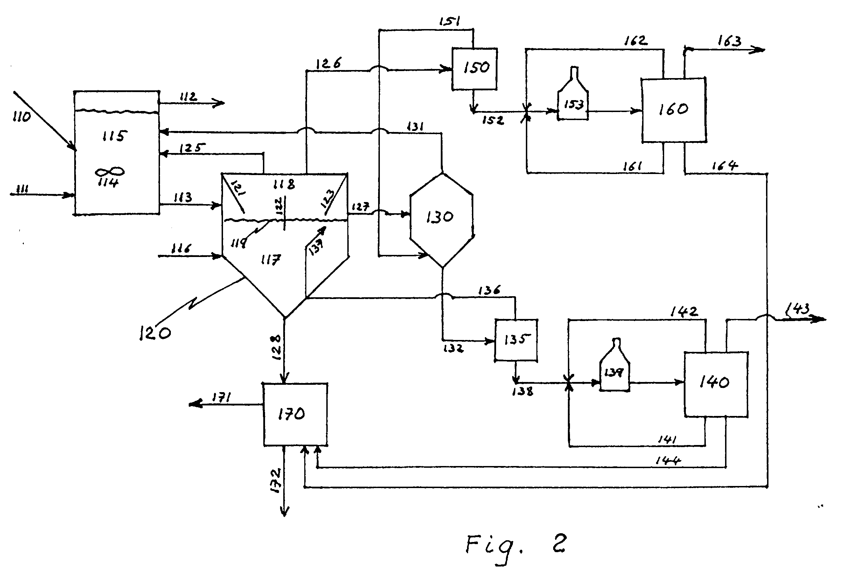

Sur la figure 2, le mélange de déchets polymères broyés est envoyé par le système d'alimentation 110 dans un mélangeur dissolveur 115 où il est mis en contact avec un solvant du polystyrène, non soluble dans l'eau et de densité inférieure à 0,9 introduit par le système d'alimentation 111. Après mélange par l'agitateur 114, la partie légère insoluble est récupérée à la surface en 112 pour traitement adapté (par exemple densification et recyclage). Le solvant contenant les polymères styréniques dissous et les autres polymères en suspension est introduit par la conduite 113 dans le séparateur 120, éventuellement muni de chicanes 121, 122, 123, pour guider les différents courants, et qui est à moitié rempli d'eau 117, alimentée par 116. Dans le cas où le séparateur est muni de chicanes, il est opportun que celles-ci atteignent l'interface entre les deux liquides de manière à optimiser la turbulence au sein des liquides et améliorer la séparation des polymères.

Le solvant 118 peut être partiellement recyclé dans le dissolveur 115 par la conduite 125 pour augmenter la concentration de polymères styréniques dissous et partiellement évacué par la conduite 126 et chauffé dans le dispositif 150 pour séparer le solvant par la conduite 151, du polystyrène fondu qui est amené dans la conduite 152 pour être chauffé davantage dans le four 153 et envoyé dans un réacteur de craquage thermique 160 d'où on récupère par la conduite 163 un mélange d'hydrocarbures composé essentiellement de styrène.

Certaines fractions de ces hydrocarbures peuvent être recyclées par la conduite 162 et mélangées aux polymères fondus, dans la conduite 152 afin de diminuer leur viscosité et d'augmenter leur vélocité au travers du dispositif de chauffage 153. Les polymères non craqués peuvent être recyclés par la conduite 161 vers le four 153. Une purge 164 permet d'évacuer les résidus incraquables pour traitement ultérieur, dans le réacteur 170.

Les polyoléfines sont en suspension le long de l'interface 119 entre le solvant 118 et l'eau 117. Elles sont entraînées par la conduite 127 éventuellement par gravité vers un moyen de séparation, par exemple un filtre ou une centrifugeuse ou, comme représenté sur la figure 2, un décanteur 130 d'où le solvant est recyclé par la conduite 131 vers le dissolveur 115. Les polyoléfines sont rincées par un contre courant de solvant pur amené par la conduite 151 afin de limiter au maximum les impuretés entraînées avec les polyoléfines et minimiser également les quantités de polystyrène dissous entraînées en même temps que les polyoléfines. Elles sont ensuite amenées par la conduite 132 vers un moyen de chauffage 135 où le solvant pur et l'eau sont récupérés par la conduite 136 et réintroduits dans le décanteur 120 au moyen de l'injecteur 137 ou de tout autre moyen approprié. Dans une alternative, l'eau peut être séparée du solvant et réintroduite dans le décanteur 120 par la conduite 116 et le solvant pur peut être réinjecté dans le bas du décanteur comme moyen de rinçage supplémentaire.

Les polyoléfines fondues sont amenées par la conduite 138 vers un moyen de chauffage 139 et ensuite vers un réacteur de craquage catalytique 140 d'où on récupère un mélange d'hydrocarbures par la conduite 143. Certaines fractions de ces hydrocarbures peuvent être recyclées par 142 et mélangées aux polyoléfines fondues afin de diminuer leur viscosité et d'augmenter leur vélocité dans le moyen de chauffage 139. Les polyoléfines non craquées peuvent être recyclées par la conduite 141 vers le moyen de chauffage 139. Enfin, une purge 144 permet d'évacuer le résidus incraquables pour traitement ultérieur, dans le réacteur 170.
Les polymères lourds (PVC, PET, etc...) et autres impuretés sont récupérées au fond du décanteur par la conduite 128 pour traitement ultérieur.

En ce qui concerne les polymères lourds tels que PVC, PET,... différentes solutions sont envisageables. Un premier cracking thermique du PVC à température relativement basse, par exemple 300°C, en présence ou non de produit absorbant le chlore comme du CaO, suivi d'un cracking catalytique du PET (hydrolyse ou méthanolyse). In fine, les résidus incraquables et les différentes purges devront être récupérées par 172 pour être mis en décharge éventuellement après incinération, tandis que les différentes fractions utiles sont récupérées par 171.

Les dispositifs de transfert de matière référés en 112, 127, 128 et 132 peuvent avantageusement comprendre une vis hélicoïdale à pas variable et/ou inclinée permettant de concentrer la fraction solide pour diminuer l'entraînement de liquide.

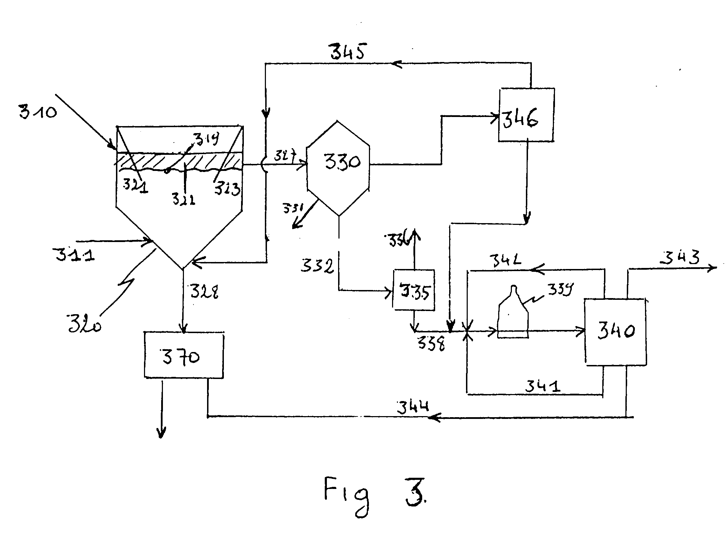

Sur la figure 3, le mélange de déchets polymères broyés est envoyé par le système d'alimentation 310 dans un mélangeur 320 où il est mis en contact avec (i) de l'eau additionnée d'une quantité de détergent telle que la densité est approximativement 1,04, et (ii) un solvant léger des polymères styréniques ayant une densité inférieure à 0,9 et qui est non soluble dans l'eau. L'eau et le solvant sont introduits par le système d'alimentation 311. Le mélangeur 320 est muni d'un agitateur et éventuellement de chicanes 321, 322, 323.

Les polymères oléfiniques sont en suspension à l'interface 319 eau/solvant. Ils sont entraînés par la conduite 327 éventuellement par gravité vers un moyen de séparation, par exemple un filtre ou une centrifugeuse ou, comme représenté sur la figure 3, un décanteur 330 d'où l'on enlève l'eau par la conduite 331. Les polyoléfines sont ensuite amenées par la conduite 332 vers un moyen de chauffage 335 où l'eau est évacuée par la conduite 336. Dans une alternative, l'eau peut être réintroduite dans le décanteur 320 par la conduite 311.

En ce qui concerne les polymères styréniques dissous on peut appliquer le procédé décrit plus avant, mais selon un autre mode d'exécution, la fraction comprenant le solvant et les polymères styréniques qui s'y sont dissous est récupérée à la sortie du décanteur 330 et envoyée au dispositif de chauffage 346 pour éliminer le solvant (qui est recyclé par la conduite 345) et donner un mélange polymère fondu composé de polymères styréniques qui est envoyé dans la conduite 338 pour être conduit avec les polyoléfines au réacteur de craquage catalytique.

Selon ce dernier mode d'exécution, les polyoléfines et les polymères styréniques fondus sont amenés par la conduite 338 vers un moyen de chauffage 339 et ensuite vers un réacteur de craquage catalytique 340 d'où on récupère un mélange d'hydrocarbures par la conduite 343. Certaines fractions de ces hydrocarbures peuvent être recyclées par la conduite 342 et mélangées aux polyoléfines et polymères styréniques fondus afin de diminuer leur viscosité et d'augmenter leur vélocité dans le moyen de chauffage 339. Les polyoléfines et les polymères styréniques non craqués peuvent être recyclés par la conduite 341 vers le moyen de chauffage 339. Enfin, une purge 344 permet d'évacuer le résidus incraquables pour traitement ultérieur, dans le réacteur 370. Les polymères lourds (PVC, PET, etc...) et autres impuretés sont récupérées au fond du décanteur par la conduite 328 pour traitement ultérieur.

En ce qui concerne les polymères lourds, on peut appliquer le même procédé que celui décrit en correspondance avec la figure 2.

Le procédé de l'invention peut aussi fonctionner en continu ou en discontinu ou en semi-continu (par exemple lorsque l'on réalise la dissolution en discontinu et le reste des opérations en continu). On peut également effectuer les opérations de dissolution des polymères styréniques, de séparation des divers polymères traités et de décantation, dans un seul bassin muni de moyens de séparation appropriés ou encore dans un seul bassin mais en travaillant en séquences successives.

Un avantage du procédé de l'invention réside dans l'utilisation d'un solvant qui permet non seulement de séparer les plastiques en 3 familles, mais également d'éviter l'utilisation d'eau pour nettoyer les polyoléfines qui représentent la majorité des déchets plastiques et qui doivent être relativement pures pour l'utilisation optimum de catalyseurs et pour la production d'hydrocarbures de bonne qualité. Cela permet d'éviter les installations coûteuses de traitement des eaux. En effet, la quantité d'eau utilisée est infime (par exemple égale à l'entraînement d'eau par 128 et non récupérée dans 170). En outre, la présence de solvant en quantité suffisante permet de fondre les polymères en utilisant des échangeurs de chaleur plutôt que l'énergie mécanique d'extrudeuses qui est très coûteuse.

Les exemples suivants illustrent les divers modes de réalisation du procédé.

### Exemple 1

On a pris un mélange de 2kg de déchets d'emballage usagés, souillés et broyés, comprenant en poids :
- polyéthylène basse densité 30%
- polyéthylène haute densité 20%
- polypropylène 20%
- polystyrène 14%
- PVC 8%
- PET 8%
et se présentant sous forme (en poids) de :
- bouteilles, corps creux 38%
- raviers 21%
- film 30%
- mousse 11%

Les déchets ont été suspendus à 30°C pendant une heure dans un mélange de 50 parties en poids de toluène et 50 parties en poids de trichloro-1,1,1 éthane.

Après décantation, on a recueilli trois fractions que l'on a séchées à 90°C.

Leur composition pondérale était la suivante :

| | |
|---|---|
| fraction légère | 68% (copeaux de polyoléfine) |
| fraction lourde | 19% (copeaux de PVC, PET, fines insolubles et particules métalliques) |
| fraction dissoute | 13% (PS) |

On a pris 700g de ces copeaux que l'on a mélangés dans une extrudeuse avec 100g de zéolithe Y (25% en poids de zéolithe Y avec une surface spécifique de 166 m²/g sur 75% de support silice-alumine). Après granulation, 8g du mélange ont été portés à 450°C. On a recueilli 1,5g d'une fraction gazeuse (à 80°C) et 5,5g d'une fraction liquide (à 80°C).

L'analyse de la fraction liquide (à 80°C) a donné les résultats suivants :

| | | |
|---|---|---|
| - distillation : | jusqu'à 100°C | 0,0% en poids |
| | 100 à 221°C | 10,94% en poids |
| | 221 à 350°C | 67,78% en poids |
| | résidu à 350°C | 21,48% en poids |

L'analyse de la fraction gazeuse (à 80°C) a donné les résultats suivants :

| | |
|---|---|
| - composition (% en poids) : | méthane 0,1 |
| éthylène 0,2 | éthane 0,3 |
| propylène 4,3 | propane 0,5 |
| butènens 13,3 | butanes 2,1 |
| pentènes 23,8 | pentanes 3,3 |
| hexènes 27,7 | hexanes 6,4 |
| hydrocarbures en C₇ et + | 18,0 |

Par ailleurs, on a récupéré la solution de polymères styréniques que l'on a évaporée. On a soumis 200g des polymères ainsi récupérés à un craquage thermique à 450°C. On a recueilli 151g d'une fraction liquide et 30g d'une fraction gazeuse.

L'analyse de la fraction liquide a donné les résultats suivants :

| | |
|---|---|
| styrène | 52,7% en poids |
| éthylbenzène | 6,7% en poids |
| toluène | 6,0% en poids |
| benzène | 0,1% en poids |
| divers légers | 8,9% en poids |
| divers lourds | 25,6% en poids |

### Exemple 2

On a pris un mélange de 2kg de déchets d'emballage usagés, souillés et broyés, comprenant en poids :
- polyéthylène haute densité 50%
- polypropylène 20%
- polystyrène et SBS 15%
- PVC 10%
- PET 5%
et se présentant sous forme (en poids) de :
- bouteilles, corps creux 68%
- raviers 24%
- mousse 8%

Les déchets ont été introduits dans de l'eau à 80°C contenant 1% en poids d'un agent tensio actif et on les a agités pendant 20 minutes.

On a progressivement ajouté du toluène à 80°C dans le récipient en quantité pondérale égale à celle de l'eau, tout en évitant le contact direct avec le PVC présent au fond du récipient.
On a ensuite agité la phase contenant le toluène pendant 40 minutes tout en la maintenant à 80°C.
Après décantation, on a recueilli quatre fractions que l'on a séchées à 110°C.
Leur composition pondérale était la suivante :
- fraction légère au-dessus du toluène : 0.5 %
- interface eau/toluène : 67.4 % (copeaux de polyoléfines)
- fraction lourde : 19.1 % (copeaux de PVC et PET, fines insolubles et particules métalliques)
- fraction dissoute : 13 % (PS)

On a pris 700g de ces copeaux que l'on a mélangés dans une extrudeuse avec 100g de zéolite Y (25% en poids de zéolithe Y avec une surface spécifique de 166m2/g sur 75% de support silice-alumine). Après granulation, 7g du mélange ont été portés à 450°C. On a receuilli 2,5g d'une fraction gazeuse (à 80°C) et 3,5g d'une fraction liquide (à 80°C).

L'analyse de la fraction liquide (à 80°C) a donné les résultats suivants :

| | | |
|---|---|---|
| - distillation : | jusqu'à 100°C | 12,38% en poids |
| | 100 à 221°C | 48,65% en poids |
| | 221 à 350°C | 30,65% en poids |
| | résidu à 350°C | 8,33% en poids |

L'analyse de la fraction gazeuse (à 80°C) a donné les résultats suivants :

| | |
|---|---|
| - composition (% en poids) : | méthane 0,4 |
| éthylène 0,43 | éthane 0,7 |
| propylène 6,02 | propane 1,3 |
| butènens 19,64 | butanes 3,6 |
| pentènes 22,24 | pentanes 3,9 |
| hexènes 15,48 | hexanes 1,7 |
| hydrocarbures en C₇ et + | 24,54 |

Par ailleurs, la solution de polymères styréniques a été traitée de la même manière qu'à l'exemple 1 et on a obtenu des résultats similaires lors du craquage thermique à 450°C.

## Revendications

1. Procédé de conversion de déchets d'emballage contenant essentiellement les polymères suivants :
- polyéthylène (PE) haute et basse densité
- polypropylène (PP)
- polystyrène (PS)
- chlorure de polyvinyle (PVC)
- polyéthylène téréphtalate (PET)
caractérisé en ce qu'il comprend au moins les étapes de :
(1) mise en contact des polymères broyés avec un liquide dissolvant les polymères styréniques mais ni les polyoléfines, ni le polyéthylène téréphtalate, ni le chlorure de polyvinyle, et capable de séparer par densité les polyoléfines du PET et du PVC;
(2) séparation en
(a) une fraction comprenant les polymères styréniques dissous,
(b) les polyoléfines, et
(c) un mélange consistant essentiellement en PET et PVC;
(3) conversion d'au moins une matière polymère séparée à l'étape précédente en produits à plus bas poids moléculaire.

2. Procédé selon la revendication 1, caractérisé en ce que l'on utilise comme liquide un mélange comprenant un solvant des polymères styréniques et de l'eau additionnée d'un ou plusieurs additifs pour obtenir une densité d'environ 1,03.

3. Procédé selon la revendication 2, caractérisé en ce que les additifs sont des détergents usuels ou du NaCl.

4. Procédé selon la revendication 1, dans lequel on utilise comme liquide un solvant ou un mélange de solvants organiques miscibles ayant une densité comprise entre 1,0 et 1,2 et de préférence entre 1,05 et 1,10.

5. Procédé selon la revendication 4, dans lequel on utilise comme liquide un mélange de trichloro-1,1,1 éthane et de toluène.

6. Procédé selon la revendication 1, dans lequel on utilise comme liquide un mélange de deux liquides comprenant au moins un solvant hydrocarboné ayant une densité comprise entre 0,75 et 0,9.

7. Procédé selon l'une quelconque des revendications 1 à 6, dans lequel on convertit les polymères styréniques par craquage thermique.

8. Procédé selon l'une quelconque des revendications 1 à 6, dans lequel on convertit les polymères oléfiniques par craquage catalytique.

9. Procédé selon l'une quelconque des revendications 1 à 3 dans lequel on convertit les polymères styréniques et les polymères oléfiniques par craquage catalytique.

10. Procédé selon l'une quelconque des revendications 7 à 9 caractérisé en ce que la fraction des polymères soumis à la conversion est fondue et transportée au réacteur de craquage dans au moins une fraction lourde des produits de conversion qui est recyclée.

## Patentansprüche

1. Verfahren zur Umwandlung von Verpackungsabfällen, welche vorwiegend folgende Polymere enthalten :
- Polyäthylen (PE) mit hoher und geringer Dichte
- Polypropylen (PP)
- Polystyrol (PS)
- Polyvinylchlorid (PVC)
- Polyäthylenterephtalat (PET),
dadurch gekennzeichnet, daß es mindestens aus folgenden Schritten besteht :
(1) Mischen der zerkleinerten Polymere mit einer Flüssigkeit, welche die Styrolpolymere aber nicht die Polyolefine, das Polyäthylenterephtalat, das Polyvinylchlorid auflöst, und welches die Polyolefine des PET und des PVC nach ihrer Dichte trennt.
(2) Trennen in
(a) eine Fraktion, die zersetzte Styrolpolymere umfaßt,
(b) Polyolefine
(c) eine Mischung, die hauptsächlich aus PET und PVC besteht;
(3) Umwandlung von wenigstens einem der zuvor getrennten Polymerwerkstoffen in Produkte mit geringerem Molekulargewicht.

2. Verfahren nach Anspruch 1, dadurch gekennzeichnet, daß die hier verwendete Flüssigkeit aus einer Mischung besteht, die ein Lösungsmittel für Styrolpolymere enthält sowie Wasser mit einem oder mehreren Zusatzstoffen, so daß eine Dichte von ungefähr 1,03 entsteht.

3. Verfahren nach Anspruch 2, dadurch gekennzeichnet, daß die Zusatzstoffe aus konventionellen Detergensen und aus NaCl bestehen.

4. Verfahren nach Anspruch 1, bei dem als Flüssigkeit ein Lösungsmittel oder eine Mischung von mengbaren organischen Lösungsmitteln verwendet wird mit einer Dichte zwischen 1,0 und 1,2 und vorzugsweise zwischen 1,05 und 1,10.

5. Verfahren nach Anspruch 4, bei dem als Flüssigkeit eine Mischung von 1,1,1-Trichloräthan und Toluol benutzt wird.

6. Verfahren nach Anspruch 1, bei dem als Flüssigkeit eine Mischung von zwei Flüssigkeiten benutzt wird, die wenigstens ein aus Kohlenwasserstoff bestehendes Lösungsmittel mit einer Dichte zwischen 0,75 und 0,9 umfaßt.

7. Verfahren nach einem der Ansprüche 1 bis 6, bei dem die Styrolpolymere durch thermisches Kracken umgewandelt werden.

8. Verfahren nach einem der Ansprüche 1 bis 6, bei dem die Olefinpolymere durch katalytisches Kracken umgewandelt werden.

9. Verfahren nach einem der Ansprüche 1 bis 3, bei dem die Styrolpolymere und die Olefinpolymere durch katalytisches Kracken umgewandelt werden.

10. Verfahren nach einem der Ansprüchen 7 bis 9, dadurch gekennzeichnet, daß der zur Umwandlung gebrachte Polymeranteil geschmolzen wird und dem Krackreaktor in wenigstens eine zurückgeführte schwere Fraktion von den Umwandlungsprodukten zugeleitet wird.

## Claims

1. Process for the conversion of packaging waste essentially containing the following polymers:
- high and low specific gravity polyethylene (PE)
- polypropylene (PP)
- polystyrene (PS)
- polyvinyl chloride (PVC)
- polyethylene terephtalate (PET)
characterised by the fact that it comprises at least the following steps:
1) contacting crushed polymers with a liquid which dissolves styrenic polymers but does not dissolve polyolefins, polyethylene terephtalate (PET) and polyvinyl chloride (PVC), and which can separate according to the specific gravity polyolefins from PET and PVC;
2) separating into:
a) a fraction comprising dissolved styrenic polymers,
b) polyolefins, and
c) a mixture consisting essentially of PET and PVC;
3) converting at least one polymeric material sorted at the preceding step into lower molecular weight products.

2. Process according to claim 1, characterised by the use as a liquid of a mixture comprising a solvent for the styrenic polymers and water added with one or more additives in order to have a specific gravity of about 1.03.

3. Process according to claim 2, characterised in that the additives are usual detergents or NaCI.

4. Process according to claim 1, in which the liquid is a solvent or a mixture of miscible organic solvents having a specific gravity comprised between 1.0 and 1.2 and preferably between 1.05 and 1.10.

5. Process according to claim 4, in which the liquid is a mixture of trichloro-1,1,1 ethane and toluene.

6. Process according to claim 1, in which the liquid is a mixture of two liquids comprising at least one hydrocarbon solvent having a specific gravity between 0.75 and 0.9.

7. Process according to any of claims 1 to 6, in which the styrenic polymers are converted by thermal cracking.

8. Process according to any of claims 1 to 6 , in which the olefinic polymers are converted by catalytic cracking.

9. Process according to any of claims 1 to 3, in which styrenic polymers and olefinic polymers are converted by catalytic cracking.

10. Process according to any of claims 7 to 9 characterised in that the polymer fraction subjected to the conversion is melted and conveyed to the cracking reactor in at least one heavy fraction of the conversion products which is recycled.
